# EUROPEAN PATENT APPLICATION

(11) **EP 4 528 889 A1**
(43) Date of publication of application: **26.03.2025**
(21) Application number: 23199460.9
(22) Date of filing: 25.09.2023
(51) Int. Cl.: H01M 10/6571

(54) **HEAT EXCHANGER AND THERMALLY CONTROLLED BATTERY SYSTEM**

(71) Applicant: Röchling Automotive SE, 68165 Mannheim (DE)
(72) Inventor: Grotti, Ermanno, 38096 Vallelaghi (TN) (DE); Pichler, Elmar, 39054 Renon (BZ) (IT); Tremonti, Claudia, 39100 Bolzano (BZ) (IT); Molinaroli, Jacopo, 39040 Salorno (BZ) (IT)
(74) Representative: Ullrich & Naumann PartG mbB

(57) **Abstract**

A heat exchanger (110) arrangeable adjacent to at least one battery (114) is proposed. The heat exchanger (110) is configured for controlling the temperature of the battery (113) and comprises at least one fluid channel (118) for guiding a coolant fluid (120) through the heat exchanger (110), wherein at least a part of the fluid channel (118) facing the battery (114) comprises a thermally conductive material. The heat exchanger (110) further comprises at least one heating element (126) arranged on at least one wall (121) of the fluid channel (118). The heat exchanger (110) further comprises at least one electrically isolating and thermally conductive compensation layer (116) comprising at least one soft and flexible material.

Further proposed is a thermally controlled battery system (112).

## Description

### Technical Field

The invention relates to a heat exchanger arrangeable adjacent to at least one battery and configured for controlling the temperature of the battery. Further, the invention relates to a thermally controlled battery system comprising at least one heat exchanger. The devices according to the present invention may generally be applied in the field of electrical power storage used in vehicles, such as in the field of electrically powered vehicles. Specifically, the invention may be applied in the field of electro mobility, such as in fuel cell, hybrid and/or electric vehicles, e.g. in cars and/or trucks. Other applications however are feasible.

### Background art

For managing and/or controlling the temperature of batteries, thermal management systems generally use heat exchangers, sometimes also referred to as heat exchange plates or cold plates. For batteries, typically, heat exchangers comprise a circulating coolant fluid to which heat generated by the battery is transferred, such that the fluid can transport the heat away from the battery.

CN 111490311 A describes an integrated heat exchange plate and a vehicle battery thermal management system. The integrated heat exchange plate comprises a liquid cooling side cover plate, a flow channel plate and a refrigeration side cover plate which are sequentially arranged in a stacked mode. A cooling liquid flowing channel is formed between the liquid cooling side cover plate and the flow channel plate, a refrigerant flowing channel is formed between the flow channel plate and the refrigeration side cover plate, and the flowing direction of a refrigerant in the refrigerant flowing channel is opposite to the flowing direction of cooling liquid in the cooling liquid flowing channel. The cooling liquid in the cooling liquid flowing channel is used for cooling a heating element. When a battery is cooled, heat on the battery is taken away by the cooling liquid, and then the cooling liquid is cooled by the refrigerant.

CN 112397806 A describes a battery cold plate integrated with a heating function, a power battery system and a new energy vehicle. The battery cold plate is attached to a battery module and comprises a cover plate and a bottom plate, heat dissipation flow channels are formed in the cover plate and/or the bottom plate, the inlet ends and the outlet ends of the heat dissipation flow channels are in fluid communication with a fluid inlet pipe and a fluid outlet pipe respectively, and the heat dissipation flow channels are multiple columns of flow channels arranged in parallel. The battery cold plate comprises heating elements and cooling fins corresponding to the heating elements in position, and the heating elements are arranged corresponding to the areas among the multiple columns of flow channels.

US 2016/020496 A1 describes a battery pack, which includes a battery cell, a thermal interface material adjacent the battery cell and a heater element integrated with the thermal interface material. Further described is a method, comprising monitoring at least one temperature condition of a battery pack that includes a battery cell, a thermal interface material and a heater element integrated with the thermal interface material; and conditioning the battery cell with the heater element if the at least one temperature condition drops below a predefined threshold value.

Despite the advantages involved in known heat exchangers, several technical challenges remain. Thus, usually, heat exchangers are expansive and require a lot of installation space, complicating both manufacturing and assembly and causing high costs. Further, there is a continuous need for increasing energy efficiency of heat exchangers, specifically in thermally controlled battery systems.

### Problem to be solved

It is therefore desirable to provide devices, which address the above-mentioned technical challenges of known devices. Specifically, a reasonably sized energetically efficient heat exchanger and thermally controlled battery system shall be proposed.

### Summary

This problem is addressed by a heat exchanger and by a thermally controlled battery system with the features of the independent claims. Advantageous embodiments, which might be realized in an isolated fashion or in any arbitrary combinations, are listed in the dependent claims as well as throughout the specification.

In a first aspect of the present invention, a heat exchanger arrangeable adjacent to at least one battery is proposed. The heat exchanger is configured for controlling the temperature of the battery. Specifically, the heat exchanger may be configured for controlling the temperature of the battery in an electrically powered vehicle. The heat exchanger comprises at least one fluid channel for guiding a coolant fluid through the heat exchanger, wherein at least a part of the fluid channel facing the battery comprises a thermally conductive material. Further, the heat exchanger comprises at least one heating element arranged on at least one wall of the fluid channel. Furthermore, the heat exchanger comprises at least one electrically isolating and thermally conductive compensation layer comprising at least one soft and flexible material. As an example and as further outlined below, the compensation layer may include a heating element, e.g. to form a heater.

The term "heat exchanger" as used herein is a broad term and is to be given its ordinary and customary meaning to a person of ordinary skill in the art and is not to be limited to a special or customized meaning. The term specifically may refer, without limitation, to an arbitrary device configured for regulating the temperature of another object by adapting its own temperature, at least the temperature of one or more of its parts, to influence the temperature of the object, i.e. of the battery, specifically of the battery in an electrically powered vehicle. In particular, the heat exchanger, by making use of the physical phenomenon of equalizing temperatures, by adapting its own temperature, or the temperature of one or more of its parts, such as to differ from the battery's temperature, may control the temperature of the battery. For example, heat or cold may be transferred from the heat exchanger to the battery and vice versa. Thereby the temperature of the battery may be controlled, i.e. deliberately regulated, by the heat exchanger. The heat exchanger may be used for both cooling and heating the battery. As used herein, the term "battery" may specifically refer, without limitation, to an arbitrary energy storage, such as to one or more of a battery cell, a battery module and a battery pack.

For cooling the temperature of the battery, the heat exchanger may adapt its temperature such that it is lower than the battery's temperature. In this case, as an example, the coolant fluid being guided through the heat exchanger by the at least one fluid channel, may be used for transporting the heat away from the battery, thereby cooling the battery. As an example, the coolant fluid may be cooled by a cooling element. The thermally conductive material of one or both of the part of the fluid channel facing the battery and of the compensation layer may increase efficiency of heat transfer from the battery to the coolant fluid being guided through the heat exchanger by the at least one fluid channel.

For heating the battery, i.e. for raising the temperature of the battery, the heat exchanger may adapt its temperature such that it is higher than the battery's temperature. In this case, the heat exchanger's temperature may be raised by heat generated from the at least one heating element of the heat exchanger. As an example, the thermally conductive material of one or both of the part of the fluid channel facing the battery and of the compensation layer may increase efficiency of heat transfer from the heating element to the battery.

The term "thermally conductive" as used herein is a broad term and is to be given its ordinary and customary meaning to a person of ordinary skill in the art and is not to be limited to a special or customized meaning. The term specifically may refer, without limitation, to a characteristic or property of a material that has a high thermal conductivity. In particular, the thermally conductive material may be or may comprise, preferably consist of, a material having a thermal conductivity in the range of from 0,1 to 10⁴ W/(mK), specifically in the range of from 0,2 to 1000 W/(mK), more specifically in the range of from 0,3 to 500 W/(mK), more specifically in the range of from 0,4 to 350 W/(mK).

The terms "electrically insulating" and "thermally conducting" of a layer, element, etc. may depend on at least two main factors: (1) material properties, e.g. like electric conductivity and thermal conductivity, and (2) dimensions, e.g. like thickness. High electric insulating and high thermal conducting layers may be expected for heaters. To achieve acceptable values, thin films made of a polymer may be used, even though polymers are not commonly considered as high-thermal conductivity materials.

The term "fluid channel" as used herein is a broad term and is to be given its ordinary and customary meaning to a person of ordinary skill in the art and is not to be limited to a special or customized meaning. The term specifically may refer, without limitation, to a pipe and/or tube having an arbitrarily shaped, closed cross section and may be configured for guiding the coolant fluid through the heat exchanger, i.e. providing guidance to a flow direction of the coolant fluid. The fluid channel may specifically be or may comprise at least one wall, such as an enclosing wall, for continuously enclosing an interior space through which the coolant fluid may flow, e.g. from an inlet of the fluid channel to an outlet of the fluid channel.

The term "coolant fluid" as used herein is a broad term and is to be given its ordinary and customary meaning to a person of ordinary skill in the art and is not to be limited to a special or customized meaning. The term specifically may refer, without limitation, to an arbitrary fluid coolant, such as to a fluid cooling agent. The coolant fluid may be a substance, liquid and/or gaseous, that is used to reduce or regulate the temperature of a system. In particular, the coolant fluid may be configured for removing heat and/or for conducting heat to a heat sink. As an example, the coolant fluid may remove and/or dissipate heat in the form of thermal energy either by an increase of the coolant fluid's temperature or by a change in its state of aggregation, e.g. in the form of transformation enthalpy. The coolant fluid may be or may comprise at least one liquid, such as one or more of water, glycerin, ethylene glycol, ethanol, propylene glycol and oil. Additionally or alternatively, the coolant fluid may be or may comprise at least one gaseous fluid, such as for example air. The coolant fluid may also referred to as "cooling fluid". Preferably, a water-glycol mix may be used as a coolant fluid. For example, a series-production for battery heat exchanger may work best with a water-glycol mixture.

The term "heating element" as used herein is a broad term and is to be given its ordinary and customary meaning to a person of ordinary skill in the art and is not to be limited to a special or customized meaning. The term specifically may refer, without limitation, to an arbitrary system configured for, by increasing its own temperature, providing heat and/or thermal energy to its surrounding matter. The heating element may for example be or may comprise an electric heating element configured for generating thermal energy by conversion from electrical energy.

Specifically, the heating element arranged on the at least one wall of the fluid channel, may be configured for transferring thermal energy onto the fluid channel and thus also onto the coolant fluid, thereby for example heating up the coolant fluid. Additionally or alternatively, the heating element arranged on the at least one wall of the fluid channel may be configured for transferring thermal energy onto the electrically isolating and thermally conductive compensation layer, wherein, as an example, the conductive compensation layer may be a heater itself.

The term "electrically isolating and thermally conductive compensation layer" as used herein is a broad term and is to be given its ordinary and customary meaning to a person of ordinary skill in the art and is not to be limited to a special or customized meaning. The electrically isolating thermally conductive compensation layer may also be referred to as "compensation layer". The term specifically may refer, without limitation, to an arbitrary layer, such as to a sheet, comprising, preferably consisting of, a material having both electrically isolating and thermally conductive characteristics. As an example, the compensation layer may be arranged on the side of the heat exchanger facing the battery, i.e. between the part of the fluid channel facing the battery and the battery to which the heat exchanger is arrangeable adjacent to.

Herein, the term "electrically isolating" is a broad term and is to be given its ordinary and customary meaning to a person of ordinary skill in the art and is not to be limited to a special or customized meaning. The term specifically may refer, without limitation, to a characteristic or property of a material that is non-conductive or that has an extremely low and thus negligible electrical conductivity. In particular, the electrically isolating material may have a specific electrical resistivity of at least 10¹⁰ Ω cm. As an example, the electrically isolating and thermally conductive compensation layer may have an electrical conductivity in the range of from 10⁻⁵ to 10⁻¹⁵ S/m, specifically in the range of from 10⁻⁷ to 10⁻¹² S/m, more specifically in the range of from 10⁻⁸ to 10⁻¹⁰ S/m.

Additionally, the material of the electrically isolating thermally conductive compensation layer may be soft and flexible, i.e. may have a soft and flexible characteristic or property. The term "soft and flexible" as used herein is a broad term and is to be given its ordinary and customary meaning to a person of ordinary skill in the art and is not to be limited to a special or customized meaning. The term specifically may refer, without limitation, to a material characteristic or property in the range of from 10 to 80 ShoreOO, preferably in the range of from 15 to 60 ShoreOO, more preferably in the range of from 20 to 40 ShoreOO, measured according to ASTM D2240-00.

The heating element may comprise at least one electrical element selected from the group consisting of a positive temperature coefficient (PTC) ink, a PTC element, a series of PTC elements, a PTC circuit and an electrically resistive material. In particular, the electrically resistive material may comprise one or more of aluminum, stainless steel, copper and constantan, such as an electrically resistive wire and/or an electrically resistive track. As an example, the heating element may be a resistive wire/track, or a PTC circuit, or a combination of the two.

The heating element may further comprise at least one encapsulating material surrounding the electrical element. As an example, the encapsulating material may be selected from the group consisting of: a thermally conductive material and an electrically isolating polymeric material, specifically a polymeric resin, a thermoplastic material, e.g. Polypropylene (PP). In particular, the thermally conductive material may be or may comprise, preferably consist of, a polymeric material, such as a thin layer of polymeric material or low-thermally-conductive material, e.g. having a thermal conductivity in the range of from 0,2 to 50 W/(mK). Additionally or alternatively, the thermally conductive material may be or may comprise, preferably consist of, a high-thermally-conductive polymeric material, e.g. having a thermal conductivity in the range of from 50 to 350 W/(mK).

The heating element may be fixed on the wall of the fluid channel by one or more of laminating, printing, and welding. Specifically, in case the heating element is fixed to the wall of the fluid channel, the fixture is made preferably by locally welding, gluing, screwing, and/or sintering.

The heating element may be fixed to the wall of the fluid channel by being immersed in a thermally conductive resin layer. In particular, the heating element may be fixed to the wall of the fluid channel by being immersed in a thermally conductive resin layer, such that the resin layer acts as a glue for fixing the heating element to the wall. As an example, the resin layer may be, preferably consist of, the encapsulating material surrounding the electrical elements as described above.

The heating element may be arranged in at least one position selected from within the fluid channel, such as on an inner surface of the fluid channel, e.g. between the wall and the coolant fluid, and on the outside of the part of the fluid channel facing the battery, such as between the fluid channel and the compensation layer. In particular, the heating element may be arranged within the fluid channel. As an example, the heating element may be arranged on an inner surface of the fluid channel. In particular, the heating element may be arranged between the wall and the coolant fluid. Additionally or alternatively, the heating element may be arranged on the outside of the part of the fluid channel facing the battery. As an example, the heating element may be arranged between the fluid channel and the compensation layer. The heating element may be also placed within the compensation layer so that the compensation layer may act as a heater.

In case the heating element may be arranged on the outside of the part of the fluid channel facing the battery cell, the heating element may further comprise at least one electrically insulating layer. In particular, the electrically insulating layer may also be needed if the heating element is arranged inside the heat exchanger, e.g. inside the fluid channel. The electrically insulating layer may comprise, preferably consist of, at least one material selected from the group consisting of a thermally conductive material and an electrically isolating polymeric material, specifically a polymeric resin, a thermoplastic material, e.g. Polypropylene (PP). As an example, the electrically insulating layer of the heating element may be, preferably consist of, the encapsulating material surrounding the electrical elements as described above. In particular, the electrically insulating layer of the heating element and the encapsulating material may be one and the same element.

The heat exchanger may comprise at least one further heating element. The further heating element may be arranged within the compensation layer. As an example, the compensation layer may include the further heating element. Thereby, the compensation layer may form a heater.

The soft and flexible material of the compensation layer may comprise at least one material selected from the group consisting of a foam material, a foam rubber, a foamed thermoplastic, a foamed thermoset, and a rubber material.

The thermally conductive material of the fluid channel may specifically comprise, preferably consist of, a metal material. In particular, the thermally conductive material of the fluid channel may comprise, preferably consist of, one or more metal materials selected from the group consisting of copper, aluminum, stainless steel and carbon.

The fluid channel may comprise at least one plastic material selected from the group consisting of a thermoplastic material, and a thermosetting material.

As an example, the fluid channel, except for the thermally conductive material, may consist of the plastic material.

In a further aspect of the present invention, a thermally controlled battery system is proposed. The thermally controlled battery system comprises at least one heat exchanger as described herein. Thus, for possible definitions and options, reference may be made to the description of the heat exchanger as provided above or as further outlined below. Further, the thermally controlled battery system comprises at least one battery. In particular, in the thermally controlled battery system, the heat exchanger is arranged adjacent to the battery, such that the compensation layer physically contacts the battery.

The thermally controlled battery system may further comprise at least one coolant fluid guided through the heat exchanger within the at least one fluid channel, at least one fluid pump for driving a circulation of the coolant fluid and at least one cooling element for cooling the coolant fluid.

The proposed devices provide a large number of advantages over known devices of similar kind. In particular, the devices according to the present application may, e.g. due to their set-up, allow for a more efficient thermal management of the battery. Specifically, the proposed heat exchanger may be more energy efficient than known heat exchangers.

Furthermore, the proposed devices may reduce assembly and manufacturing complexity. Specifically, the proposed heat exchanger may have a reduced number of components compared to known devices. In particular, the proposed heat exchanger and thermally controlled battery system may allow for less individual parts. This may specifically help reduce manufacturing costs and complexity of the assembly. For example, by a reduced number of interfaces and/or boundary surfaces, i.e. when assembling the components to form the thermally controlled battery system, compared to known devices. Further, the proposed heat exchanger may be smaller and thus require less installation space than known devices.

Summarizing and without excluding further possible embodiments, the following embodiments may be envisaged:
Embodiment 1: A heat exchanger arrangeable adjacent to at least one battery and configured for controlling the temperature of the battery, specifically in an electrically powered vehicle, the heat exchanger comprising
   - at least one fluid channel for guiding a coolant fluid through the heat exchanger, wherein at least a part of the fluid channel facing the battery comprises a thermally conductive material,
   - at least one heating element arranged on at least one wall of the fluid channel,
   - at least one electrically isolating and thermally conductive compensation layer comprising at least one soft and flexible material.
Embodiment 2: The heat exchanger according to the preceding embodiment, wherein the heating element comprises at least one electrical element selected from the group consisting of a positive temperature coefficient (PTC) ink, a PTC element, a series of PTC elements, a PTC circuit and an electrically resistive material, comprising one or more of aluminum, stainless steel, copper and constantan, such as an electrically resistive wire and/or an electrically resistive track.
Embodiment 3: The heat exchanger according to the preceding embodiment, wherein the heating element further comprises at least one encapsulating material surrounding the electrical elements, wherein the encapsulating material is selected from the group consisting of a thermally conductive material and an electrically isolating polymeric material, specifically a polymeric resin, a thermoplastic material, e.g. Polypropylene (PP).
Embodiment 4: The heat exchanger according to any one of the preceding embodiments, wherein the heating element is fixed on the wall of the fluid channel by one or more of laminating, printing, and welding, preferably by locally welding, gluing, screwing, and/or sintering.
Embodiment 5: The heat exchanger according to any one of the preceding embodiments, wherein the heating element is fixed to the wall of the fluid channel by being immersed in a thermally conductive resin layer, such that the resin layer acts as a glue for fixing the heating element to the wall.
Embodiment 6: The heat exchanger according to any one of the preceding embodiments, wherein the heating element is arranged in at least one position selected from within the fluid channel, such as on an inner surface of the fluid channel, e.g. between the wall and the coolant fluid, and on the outside of the part of the fluid channel facing the battery, such as between the fluid channel and the compensation layer.
Embodiment 7: The heat exchanger according to the preceding embodiment, wherein in case the heating element is arranged on the outside of the part of the fluid channel facing the battery cell or the heating element is arranged inside the heat exchanger, the heating element further comprises at least one electrically insulating layer, wherein the electrically insulating layer comprises at least one material selected from the group consisting of a thermally conductive material and an electrically isolating polymeric material, specifically a polymeric resin, a thermoplastic material, e.g. Polypropylene (PP).
Embodiment 8: The heat exchanger according to any one of the preceding embodiments, wherein the heat exchanger comprises at least one further heating element, wherein the further heating element is arranged within the compensation layer.
Embodiment 9: The heat exchanger according to any one of the preceding embodiments, wherein the soft and flexible material of the compensation layer comprises at least one material selected from the group consisting of a foam material, a foam rubber, a foamed thermoplastic, a foamed thermoset, and a rubber material.
Embodiment 10: The heat exchanger according to any one of the preceding embodiments, wherein the thermally conductive material of the fluid channel comprises one or more materials selected from the group consisting of copper, aluminum, stainless steel and carbon.
Embodiment 11: The heat exchanger according to any one of the preceding embodiments, wherein the fluid channel comprises at least one plastic material selected from the group consisting of a thermoplastic material, and a thermosetting material.
Embodiment 12: The heat exchanger according to any one of the preceding embodiments, wherein the fluid channel, except for the thermally conductive material, consists of the plastic material.
Embodiment 13: A thermally controlled battery system comprising at least one heat exchanger according to any one of the preceding embodiments and at least one battery, wherein the heat exchanger is arranged adjacent to the battery, such that the compensation layer physically contacts the battery.
Embodiment 14: The thermally controlled battery system according to the preceding embodiment further comprising at least one coolant fluid guided through the heat exchanger within the at least one fluid channel, at least one fluid pump for driving a circulation of the coolant fluid and at least one cooling element for cooling the coolant fluid.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1 to 3: show different embodiments of a heat exchanger in a thermally controlled battery system in a schematic side view; and
- Figures 4 and 5: shows another embodiment of a heat exchanger in a schematic exploded view (Figure 4) and in an assembled view (Figure 5).

### Detailed description of the embodiments

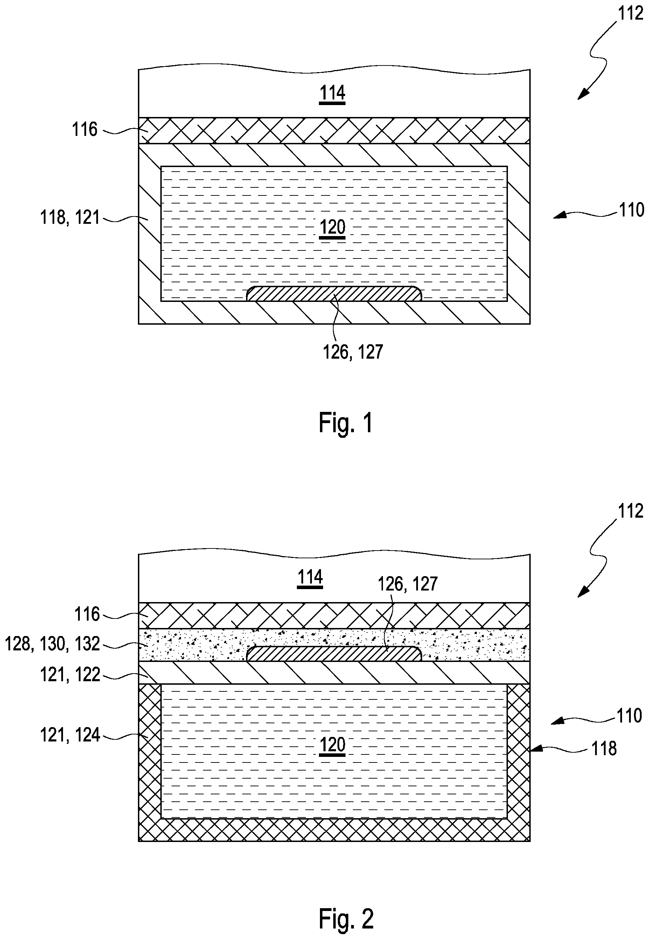

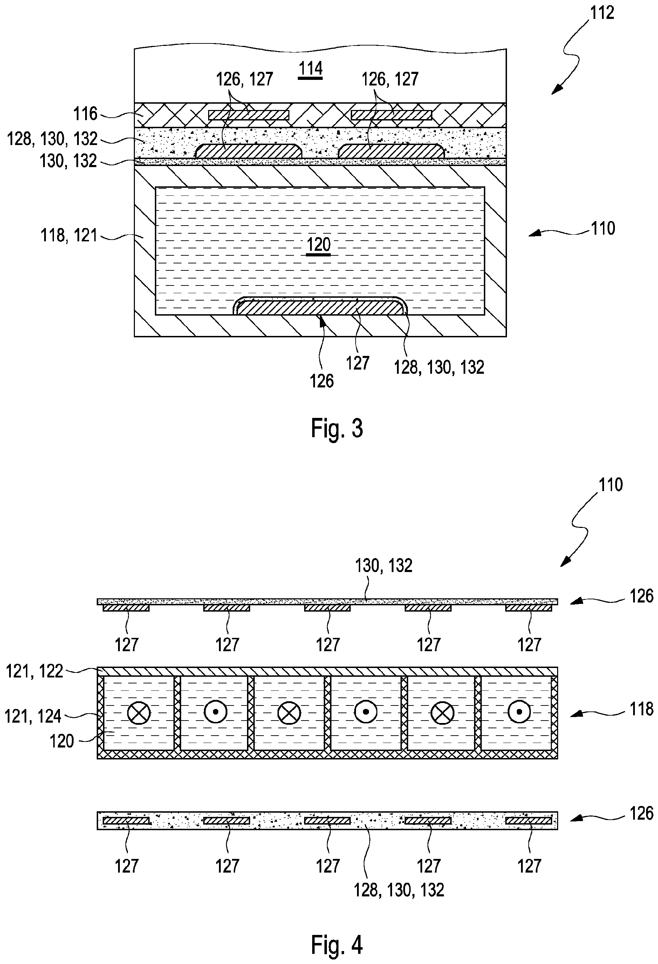

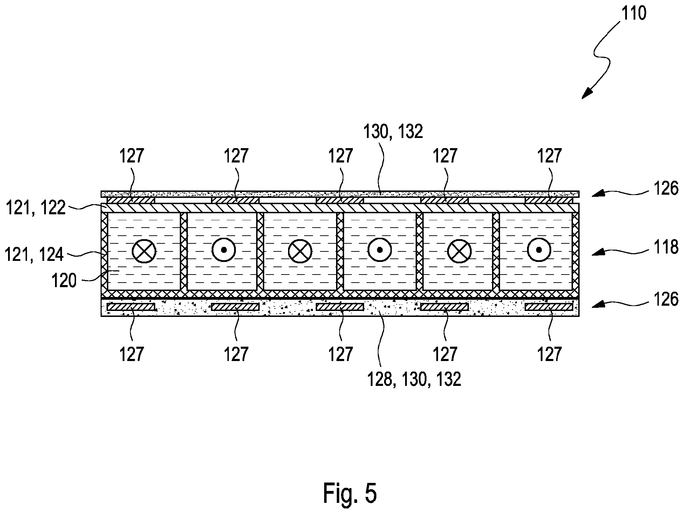

In Figures 1 to 3, schematic side views of different embodiments of a heat exchanger 110 in a thermally controlled battery system 112 are illustrated. A further, different embodiment of a heat exchanger 110 is illustrated in Figures 4 and 5, wherein Figure 5 shows the assembled view of the heat exchanger shown in Figure 4 in a schematic exploded view.

The thermally controlled battery system 112 comprises the heat exchanger 110 and a battery 114 adjacent to which the heat exchanger 110 is arranged. In particular, in the thermally controlled battery system 112, the heat exchanger 110 is arranged adjacent to the battery 114, such that a compensation layer 116 of the heat exchanger 110 physically contacts the battery 114.

The heat exchanger 110 is configured for controlling the temperature of the battery 114, specifically in an electrically powered vehicle. The heat exchanger 110 comprises the at least one electrically isolating and thermally conductive compensation layer 116, wherein the compensation layer 116 comprises at least one soft and flexible material. Further, the heat exchanger 110 comprises at least one fluid channel 118 for guiding a coolant fluid 120 through the heat exchanger 110. As an example, and as exemplarily illustrated by the arrows pointing out of the drawing plane and arrows pointing into the drawing plane in Figures 4 and 5, the flow direction of the coolant fluid 120 through the heat exchanger 110 may be guided by the fluid channel 118.

At least a part of the fluid channel 118 facing the battery 114 comprises a thermally conductive material. Thus, the fluid channel 118 may, e.g. in its at least one wall 121, comprise a thermally conductive material. This set-up is exemplarily illustrated in Figures 1 and 3. Alternatively, only one part of the wall 121 of the fluid channel 118, which faces the battery 114, such as a lid 122, may comprise the thermally conductive material. This set-up is exemplarily illustrated in Figure 2. Specifically in the latter set-up, the remaining parts 124 of the at least one wall 121 of the fluid channel 118 may be or may comprise a plastic material.

Further, the heat exchanger 110 comprises at least one heating element 126 arranged on the at least one wall 121 of the fluid channel 118. The heating element 126 comprises at least one electrical element 127. Optionally, the heating element 126 comprises at least one encapsulating material 128. As an example, the heating element 126 may be immersed in a thermally conductive resin layer 130, wherein said thermally conductive resin layer 130 may be the same material as the encapsulating material 128. The resin layer 130 might be used also for the heating element 126 inside the heat exchanger 110, e.g. inside the fluid channel 118.

Additionally or alternatively, the heating element 126 may be fixed to and/or on the wall 121 of the fluid channel 118 by one or more of laminating, printing, and welding, preferably by locally welding, gluing, screwing, and/or sintering. In particular, the heating element 126 may be arranged in at least one position selected from within the fluid channel 118, and on the outside of the part of the fluid channel 118 facing the battery 114. As an example, in case the heating element 126 is arranged on the outside of the part of the fluid channel 118 facing the battery cell 114, the heating element 126 may further comprise at least one electrically insulating layer 132. As an example, the heating element 126 may also comprise the electrically insulating layer 132 when being arranged inside the heat exchanger 110, e.g. inside the fluid channel 118.

The heat exchanger 110 may comprise further heating elements 126. As an example, at least one further heating element may be arranged within the compensation layer 116. This set-up is exemplarily illustrated in Figure 3.

### List of reference numbers

- 110: heat exchanger
- 112: thermally controlled battery system
- 114: battery
- 116: compensation layer
- 118: fluid channel
- 120: coolant fluid
- 121: wall
- 122: lid
- 124: remaining parts
- 126: heating element
- 127: electrical element
- 128: encapsulating material
- 130: thermally conductive resin layer
- 132: electrically insulating layer

## Claims

1. A heat exchanger (110) arrangeable adjacent to at least one battery (114) and configured for controlling the temperature of the battery (113), the heat exchanger (110) comprising
- at least one fluid channel (118) for guiding a coolant fluid (120) through the heat exchanger (110), wherein at least a part of the fluid channel (118) facing the battery (114) comprises a thermally conductive material,
- at least one heating element (126) arranged on at least one wall (121) of the fluid channel (118),
- at least one electrically isolating and thermally conductive compensation layer (116) comprising at least one soft and flexible material.

2. The heat exchanger (110) according to the preceding claim, wherein the heating element (126) comprises at least one electrical element (127) selected from the group consisting of a positive temperature coefficient (PTC) ink, a PTC element, a series of PTC elements, a PTC circuit and an electrically resistive material, comprising one or more of aluminum, stainless steel, copper and constantan.

3. The heat exchanger (110) according to the preceding claim, wherein the heating element (126) further comprises at least one encapsulating material (128) surrounding the electrical element (127), wherein the encapsulating material is selected from the group consisting of a thermally conductive material and an electrically isolating polymeric material, specifically a polymeric resin, a thermoplastic material, e.g. Polypropylene (PP).

4. The heat exchanger (110) according to any one of the preceding claims, wherein the heating element (126) is fixed on the wall (121) of the fluid channel (118) by one or more of laminating, printing, welding, gluing, screwing, and sintering.

5. The heat exchanger (110) according to any one of the preceding claims, wherein the heating element (126) is fixed to the wall (121) of the fluid channel by being immersed in a thermally conductive resin layer (128), such that the resin layer (128) acts as a glue for fixing the heating element (126) to the wall (121).

6. The heat exchanger (110) according to any one of the preceding claims, wherein the heating element (126) is arranged in at least one position selected from within the fluid channel (126), and on the outside of the part of the fluid channel (126) facing the battery (114).

7. The heat exchanger (110) according to the preceding claim, wherein in case the heating element (126) is arranged on the outside of the part of the fluid channel (118) facing the battery cell (114), the heating element (126) further comprises at least one electrically insulating layer (132), wherein the electrically insulating layer (132) comprises at least one material selected from the group consisting of a thermally conductive material and an electrically isolating polymeric material, specifically a polymeric resin, a thermoplastic material, e.g. Polypropylene (PP).

8. The heat exchanger (110) according to any one of the preceding claims, wherein the heat exchanger (110) comprises at least one further heating element (126), wherein the further heating element (126) is arranged within the compensation layer (116).

9. The heat exchanger (110) according to any one of the preceding claims, wherein the soft and flexible material of the compensation layer (116) comprises at least one material selected from the group consisting of a foam material, a foam rubber, a foamed thermoplastic, a foamed thermoset, and a rubber material.

10. The heat exchanger (110) according to any one of the preceding claims, wherein the thermally conductive material of the fluid channel (118) comprises one or more metal materials selected from the group consisting of copper, aluminum, stainless steel and carbon.

11. The heat exchanger (110) according to any one of the preceding claims, wherein the fluid channel (118) comprises at least one plastic material selected from the group consisting of a thermoplastic material, and a thermosetting material.

12. The heat exchanger (118) according to any one of the preceding claims, wherein the fluid channel (118), except for the thermally conductive material, consists of the plastic material.

13. A thermally controlled battery system (112) comprising at least one heat exchanger (110) according to any one of the preceding claims and at least one battery (114), wherein the heat exchanger (110) is arranged adjacent to the battery (114), such that the compensation layer (116) physically contacts the battery (114).

14. The thermally controlled battery system (112) according to the preceding claim further comprising at least one coolant fluid (120) guided through the heat exchanger (120) within the at least one fluid channel (118), at least one fluid pump for driving a circulation of the coolant fluid and at least one cooling element for cooling the coolant fluid (120).
